# EUROPÄISCHE PATENTANMELDUNG

(11) **EP 4 497 576 A1**
(43) Veröffentlichungstag der Anmeldung: **29.01.2025**
(21) Anmeldenummer: 23187209.4
(22) Anmeldetag: 24.07.2023
(51) Int. Cl.: B29C 65/02, B65B 51/14, B65B 55/24, B29C 65/04, B29C 65/08

(54) **VORRICHTUNG UND VERFAHREN ZUM VORBEREITEN DES SCHWEISSNAHTBEREICHS DES BEFÜLLSCHLAUCHS EINES BEUTELS**

(71) Anmelder: Harro Höfliger Verpackungsmaschinen GmbH, 71573 Allmersbach im Tal (DE)
(72) Erfinder: Rosenland, Jörg, 71573 Allmersbach im Tal (DE)
(74) Vertreter: Gleim Petri Patent- und Rechtsanwaltspartnerschaft mbB

(57) **Zusammenfassung**

Die Erfindung betrifft eine Vorrichtung (10) zum Vorbereiten des Schweißnahtbereichs des Befüllschlauchs (20) eines Beutels (12). Die Vorrichtung (10) besitzt eine Halteeinrichtung für den Beutel (12) und ein Saugrohr (50), das in den Befüllschlauch (20) des Beutels (12) eingeführt worden ist. Erfindungsgemäß ist eine Klemmvorrichtung (42, 44) vorhanden, durch die der Befüllschlauch (20) oder der Beutel (12) abgeklemmt werden kann.

## Beschreibung

### TECHNISCHES GEBIET

Die Erfindung betrifft eine Vorrichtung und ein Verfahren zum Vorbereiten des Schweißnahtbereichs des Befüllschlauchs eines Beutels, insbesondere eines Infusionsbeutels. Bei den Infusionsbeuteln kann es sich um Beutel mit lediglich einer Kammer handeln, aber auch um Mehrkammerbeutel. Mehrkammerbeutel können beispielsweise auch ein Pulver und eine Liquidkammer umfassen.

### STAND DER TECHNIK

Die Befüllung von Infusionsbeuteln muss in der Regel unter besonderen Bedingungen ("low bio burden" genannt oder auch bis hin zu aseptischen Bedingungen) erfolgen, da der in den Infusionsbeuteln enthaltene Inhalt einem Patienten zugeführt wird und daher nicht kontaminiert werden darf. Bei Sauerstoff sensitiven Inhaltsstoffen, insbesondere bei Krebsmedikamenten oder auch bei Infusionen zur parenteralen Ernährung, kann eine Abfüllung der Infusionsbeutel unter Inertgas notwendig sein, da die abzufüllende Flüssigkeit nicht mit Luft-Sauerstoff in Kontakt kommen darf. Dabei wird in der Regel Stickstoff als Inertgas verwendet. Bei manchen Inhaltsstoffen ist eine Sterilisation nach der Abfüllung möglich. In diesem Fall ist ein aseptischer Produktionsprozess nicht erforderlich. Sofern eine nachträgliche Sterilisation dagegen nicht möglich ist, muss ein aseptischer Produktionsprozess durchgeführt werden.

Die Beutel besitzen in der Regel einen Befüllschlauch, über den das Befüllen der Beutel erfolgen kann. Dazu wird eine Dosiernadel in den Befüllschlauch eingeführt. Die Dosiernadel kann an ihrer Außenkontur zumindest ein Konturmerkmal aufweisen, durch das der elastische Befüllschlauch von innen aufgeweitet wird. Der Befüllschlauch dichtet sich durch seine Eigenspannung daraufhin selbst gegen die Dosiernadel ab. Eine solche Abdichtung des Befüllschlauchs gegen die Dosiernadel ist erforderlich, damit während der Dosierung keine Flüssigkeit zwischen die Dosiernadel und den Befüllschlauch gelangen kann. Während der Befüllung des Beutels kann es zu Gegenkräften kommen. Daher muss der Befüllschlauch an den Konturmerkmalen so stark gedehnt werden, dass die Kräfte der Materialspannung größer sind als die Kräfte der Flüssigkeit. Wird der Befüllschlauch nach der vollständigen Befüllung des Infusionsbeutels von der Dosiernadel abgezogen, wird der Befüllschlauch dabei in der Regel relativ stark in der Länge gedehnt. Anschließend zieht sich der Befüllschlauch schlagartig wieder zusammen. Dies kann zu Produktspritzern in die Umgebung führen; auch eine Verschmutzung der Innenseite des Befüllschlauchs ist möglich. Auch beim oft angewandten aktiven Abschieben des Befüllschlauchs von der Dosiernadel kann es durch die Spannungen zu ähnlichen Effekten und dadurch auch zu Verschmutzungen kommen.

Auch beim Herausziehen der Dosiernadel aus dem Befüllschlauch ist es sehr wahrscheinlich, dass es zu einem Benetzen der Innenseite des Befüllschlauchs mit der zu befüllenden Flüssigkeit kommt. Auch auf der endseitigen Kante des Befüllschlauchs können kleine Tropfen der Flüssigkeit verbleiben.

Um zu verhindern, dass sich die in dem Beutel vorhandene Flüssigkeit nach dem Ende des Befüllvorgangs in den Befüllschlauch zieht, kann zunächst eine kurze Nachbegasung vorgenommen werden. Bei der Verwendung eines Dosierventils mit Anschlüssen sowohl für die Flüssigkeit als auch für ein Inertgas ist dies grundsätzlich möglich. Soll bei der Dosierung dagegen auf eine aktive Nachbegasung verzichtet werden, muss auf andere Weise dafür gesorgt werden, dass der Dosierschlauch belüftet wird. Dies kann insbesondere bei einer Befüllung mittels "Single Use"-Komponenten schwierig sein.

Eine alternative Vorrichtung, durch die das Herausziehen der Dosiernadel aus dem Befüllschlauch erleichtert wird, ist in der EP 22 195 250.0 beschrieben.

Grundsätzlich ist es wichtig, dass im Endbereich des Befüllschlauchs keine Flüssigkeit vorhanden ist. Die Flüssigkeitsreste im Endbereich des Befüllschlauchs können das anschließende Verschließen des Beutels erschweren. So kann es beispielsweise beim Verschweißen mittels Hochfrequenzschweißverfahren zu Spannungsüberschlägen führen, die auch innerhalb des Befüllschlauchs erfolgen können. Wird über das Schlauchende hinaus geschweißt, ist das Risiko nochmals deutlich erhöht, dass es zu solchen Spannungsüberschlägen kommt. Darüber hinaus kann es auch dann zu Spannungsüberschlägen kommen, wenn sich Flüssigkeitsreste durch den Anpressdruck der Schweißbacken nach außen drücken. Gegebenenfalls kann es auch zu Undichtigkeiten des Beutels kommen, was zu einem Ausschluss des entsprechenden Produkts führen würde. Dies kann insbesondere bei proteinhaltigen Flüssigkeiten zum Problem werden. Proteinhaltige Flüssigkeiten können eine sichere Verschweißung erschweren, da die Proteine eine Barriereschicht bilden.

Im Stand der Technik wird die Schweißnaht abhängig von dem Schlauchwerkstoff, der Flüssigkeit und dem gewählten Schweißverfahren (in der Regel Ultraschallschweißverfahren oder Hochfrequenzschweißverfahren) im Bereich des feuchten Befüllschlauchs gesetzt. Gegebenenfalls wird die Schweißnaht sogar durch die Flüssigkeit durchgesetzt, wenn die Flüssigkeit bis in den Befüllschlauch steht. Ob eine solche Schweißnaht erfolgreich ist, hängt unter anderem von dem Schlauchwerkstoff, der Art der Flüssigkeit, dem gewählten Schweißverfahren und der verfügbaren Schweißzeit ab.

### DARSTELLUNG DER ERFINDUNG

Ausgehend von diesem vorbekannten Stand der Technik liegt der Erfindung die Aufgabe zugrunde, eine Vorrichtung und ein Verfahren zum Vorbereiten des Schweißnahtbereichs des Befüllschlauchs eines Beutels anzugeben, die eine möglichst sichere und einfache Verschweißung des Befüllschlauchs möglich machen.

Die erfindungsgemäße Vorrichtung zum Vorbereiten des Schweißnahtbereichs des Befüllschlauchs eines Beutels ist durch die Merkmale des Hauptanspruchs 1 gegeben. Das erfindungsgemäße Verfahren zum Vorbereiten des Schweißnahtbereichs des Befüllschlauchs eines Beutels ist durch die Merkmale des nebengeordneten Anspruchs 6 gegeben. Sinnvolle Weiterbildungen der Erfindung sind Gegenstand von sich an diese Ansprüche anschließenden weiteren Ansprüchen.

Die erfindungsgemäße Vorrichtung zum Vorbereiten des Schweißnahtbereichs des Befüllschlauchs eines Beutels besitzt eine Halteeinrichtung für den Beutel. Erfindungsgemäß ist ein Saugrohr vorhanden, das in den Befüllschlauch des Beutels eingeführt werden kann. Darüber hinaus ist eine Klemmvorrichtung vorhanden, durch die der Befüllschlauch oder der Beutel abgeklemmt werden kann. Durch die erfindungsgemäße Vorrichtung kann die Feuchtigkeit innerhalb des Befüllschlauchs im Schweißnahtbereich so reduziert werden, dass die Schweißnaht exakt gesetzt werden kann und keine Undichtigkeiten zu befürchten sind.

Vorzugsweise kann die Klemmvorrichtung zwischen dem freien Ende des Saugrohrs und dem Beutel vorhanden sein. Dadurch kann der Befüllschlauch durch die Klemmvorrichtung abgeklemmt werden. Alternativ dazu kann die Klemmvorrichtung auch im oberen Bereich des Beutels vorhanden sein. Dadurch kann der Beutel oberhalb der in dem Beutel bereits vorhandenen Flüssigkeit abgeklemmt werden.

Bei dem erfindungsgemäßen Verfahren zum Vorbereiten des Schweißnahtbereichs des Befüllschlauchs eines Beutels wird der Befüllschlauch oder der Beutel abgeklemmt. In den Befüllschlauch wird ein Saugrohr eingeführt. Durch dieses Saugrohr wird die in dem Befüllschlauch verbliebene Flüssigkeit abgesaugt. Durch die Abklemmung des Befüllschlauchs oder des Beutels kann dabei verhindert werden, dass die in dem Beutel vorhandene Flüssigkeit mit abgesaugt wird.

Durch hohe Luftgeschwindigkeiten beim Absaugen wird der zu schweißende Bereich somit ausreichend gut von Produktrückständen befreit. Auf diese Weise kann nicht nur die Gefahr von Spannungsüberschlägen vermieden werden, gleichzeitig wird auch der Einfluss der in dem Beutel enthaltenen Flüssigkeit auf die Schweißnahtqualität so reduziert, dass eine gute Qualität der Schweißnaht erreicht werden kann. Insbesondere bei proteinhaltigen Produkten kann die erfindungsgemäße Vorrichtung beziehungsweise das erfindungsgemäße Verfahren somit den entscheidenden Unterschied ausmachen.

Grundsätzlich ist es egal, ob zunächst das Saugrohr in den Befüllschlauch eingeführt wird, ober ob zunächst der Befüllschlauch oder der Beutel an der gewünschten Stelle abgeklemmt wird. Das Absaugen der in dem Befüllschlauch verbliebenen Flüssigkeit sollte jedoch erst nach dem Abklemmen des Befüllschlauchs oder des Beutels erfolgen, so dass nicht versehentlich gewünschtes Produkt aus dem Beutel wieder entfernt wird.

Vorzugsweise kann in einem ersten Schritt das Abklemmen des Befüllschlauchs oder des Beutels erfolgen. In diesem Fall kann das Absaugen der in dem Befüllschlauch verbliebenen Flüssigkeit bereits während des Einführens des Saugrohrs erfolgen. Dies ermöglicht eine besonders effektive und rasche Trocknung der Innenwände des Befüllschlauchs. Nach dem Einführen des Saugrohrs kann das Saugrohr für eine gewisse Zeit innerhalb des Befüllschlauchs verbleiben, während das Absaugen fortgesetzt wird.

In der Regel erfolgt die Befüllung des Befüllschlauchs von oben, so dass der Befüll-schlauch an der oberen Kante des Beutels angeordnet ist. Daher wird auch das Saugrohr in der Regel von oben in den Befüllschlauch eingefüllt. Entsprechend ist die Klemmvorrichtung ein Stück unterhalb des freien Endes des Saugrohrs angeordnet.

Um das freie Ende des Befüllschlauchs optimal trocknen zu können, kann zwischen der Außenwand des Saugrohrs und der Innenwand des Befüllschlauchs ein umlaufender Zwischenraum vorhanden sein. Auf diese Weise kann auch derjenige Bereich des Befüllschlauchs, in dem sich das Saugrohr befindet, optimal behandelt werden. Darüber hinaus können auch Tropfen von der Kante des Befüllschlauchs entfernt werden.

Vorzugsweise kann die erfindungsgemäße Vorrichtung über eine Siegelvorrichtung verfügen, die zwischen der Klemmvorrichtung und dem freien Ende des Befüllschlauchs angeordnet ist. Eine solche Siegelvorrichtung kann insbesondere zwei Siegelbacken aufweisen, zwischen denen die Siegelnaht gebildet werden kann.

In diesem Fall kann das Verschweißen des Befüllschlauchs unmittelbar nach dem Entfernen des Saugrohrs erfolgen. Der Befüllschlauch kann dabei noch abgeklemmt sein, so dass eine erneute Kontamination der Innenwände des Befüllschlauchs ausgeschlossen werden kann.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschreiben und erläutert. Es zeigen:
- Fig. 1: eine schematische Darstellung der erfindungsgemäßen Vorrichtung vor Beginn des Vorbereitungsverfahrens,
- Fig. 2: eine schematische Darstellung gemäß Fig. 1 nach dem Abklemmen des Befüllschlauchs,
- Fig. 3: eine schematische Darstellung gemäß Fig. 2 während dem Einführen des Saugrohrs und gleichzeitigem Absaugen der in dem Befüllschlauch verbliebenen Flüssigkeit,
- Fig. 4: eine schematische Darstellung gemäß Fig. 3 nach erfolgreichem Absaugen der Flüssigkeit
- Fig. 5: eine schematische Darstellung gemäß Fig. 4 nach dem Entfernen des Saugrohrs,
- Fig. 6: eine schematische Darstellung gemäß Fig. 5 während des Verschweißens des Befüllschlauchs.

### WEGE ZUM AUSFÜHREN DER ERFINDUNG

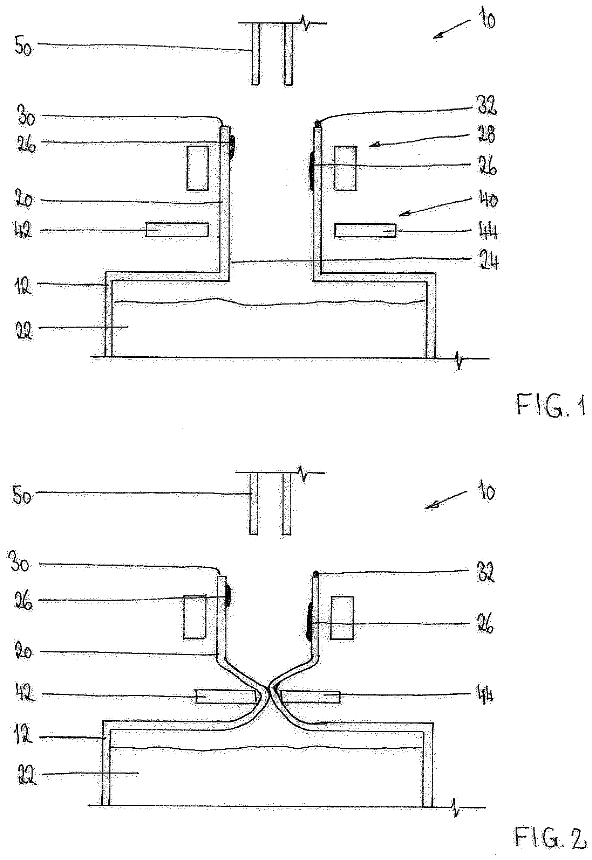

Die erfindungsgemäße Vorrichtung 10 ist in den Fig 1 bis 6 schematisch dargestellt. Die Vorrichtung 10 besitzt eine hier nicht dargestellte Halteeinrichtung, mittels der ein Beutel 12, bei dem es sich insbesondere um einen Infusionsbeutel 12 handeln kann, gehalten werden kann. Der Beutel 12 wird durch die Halteeinrichtung im Wesentlichen hängend gehalten, so dass der Beutel 12 etwa vertikal ausgerichtet ist.

Der Beutel 12 besitzt einen Befüllschlauch 20, der an der oberen Kante des Beutels 12 angeordnet ist. Der Befüllschlauch 20 kann dabei einteilig mit dem Beutel 12 vorhanden, oder an dem Beutel 12 befestigt sein. Der Beutel 12 wurde bereits an einer vorherigen Bearbeitungsstation mit zumindest einer Flüssigkeit 22 befüllt. Durch die Befüllung mit der Flüssigkeit 22 sind an der Innenseite 24 des Befüllschlauchs 20 im vorliegenden Beispielsfall an zwei Stellen Tropfen 26 der Flüssigkeit 22 verblieben. Diese verbliebenen Flüssigkeitstropfen 26 befinden sich im Schweißnahtbereich 28 des Befüllschlauchs 20. Auch an der umlaufenden Kante 30 des Befüllschlauchs 20 befindet sich im vorliegenden Beispielsfall ein weiterer Tropfen 32 der Flüssigkeit 22.

Die Tropfen 26 können das Herstellen einer Siegelnaht 34 erschweren und die Qualität der Siegelnaht 34 beeinträchtigen. Daher sollen derartige Tropfen 26 vor dem Herstellen der Schweißnaht 34 entfernt werden. Die Tropfen 32 auf der Kante 30 des Befüllschlauchs 20 können nach dem Herstellen der Siegelnaht 34 zu einer Verschmutzung der Außenseite des Beutels 12 beziehungsweise des Befüllschlauchs 20 führen, so dass auch diese Tropfen 32 möglichst entfernt werden sollen.

Die erfindungsgemäße Vorrichtung 10 weist daher im Bereich des Befüllschlauchs 20 eine Klemmvorrichtung 40 auf. Die Klemmvorrichtung 40 weist im vorliegenden Beispielsfall zwei Klemmbacken 42, 44 auf. Durch die Klemmbacken 42, 44 kann der Befüllschlauch 20 dicht abgeklemmt werden. Dadurch kann keine weitere Flüssigkeit 22 aus dem Beutel 12 in den Befüllschlauch 20 gelangen; gleichzeitig kann auch keine Luft oder Flüssigkeit mehr aus dem Befüllschlauch 20 in den Beutel 12 nachfließen. Im vorliegenden Beispielsfall ist die Klemmvorrichtung 40 relativ nahe an der oberen Kante des Beutels 12 angeordnet. Abhängig von der Länge des Befüllschlauchs 20 kann die Klemmvorrichtung 40 auch weiter von der oberen Kante des Beutels 12 entfernt werden.

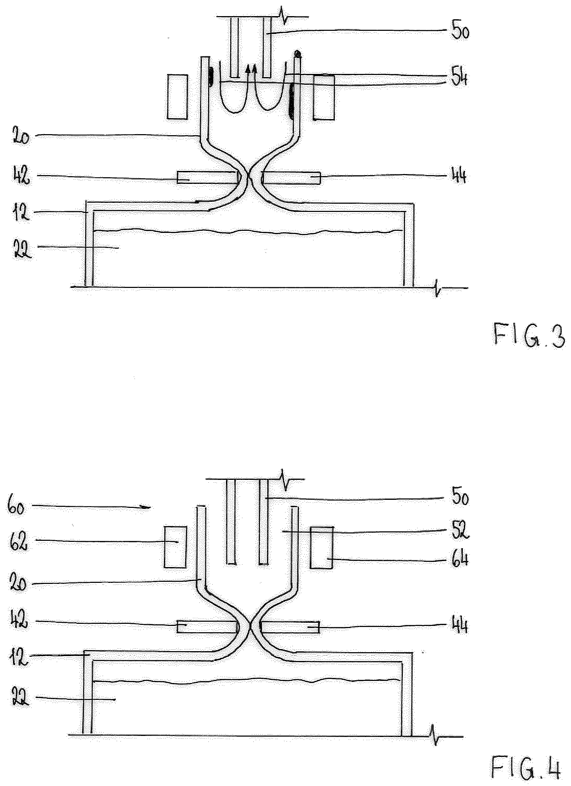

Dazu besitzt die Vorrichtung 10 ein Saugrohr 50, das zunächst außerhalb des Befüllschlauchs 20 vorhanden ist (siehe Fig. 1). Nach dem Befüllen des Beutels 12 mit der Flüssigkeit 22 wird im vorliegenden Beispielsfall zunächst der Befüllschlauch 20 durch die Klemmvorrichtung 40 abgeklemmt (siehe Fig. 2). Anschließend wird das Saugrohr 50 zumindest ein Stück weit in den Befüllschlauch 20 eingeführt (siehe Fig. 3). Dabei wird durch das Saugrohr 50 Luft abgesaugt. Dies kann beispielsweise durch einen Unterdruckerzeuger erfolgen, der an dem Saugrohr 50 angeschlossen ist. Das Saugrohr 50 ist dabei so ausgestaltet, dass sich zwischen der Außenseite des Saugrohrs 50 und der Innenseite 24 des Befüllschlauchs 20 ein umlaufender Zwischenraum 52 ausbildet. Durch diesen Zwischenraum 52 wird die Luft zunächst durch den Befüllschlauch 20 in Richtung der Klemmvorrichtung 40 gesaugt, anschließend wird die Luft wieder durch das Saugrohr 50 aus dem Befüllschlauch 20 abgesaugt. Durch diese Luftströmung 54 werden die in dem Befüllschlauch 20 verbliebenen Flüssigkeitstropfen 26 mitgerissen und aus dem Befüllschlauch 20 entfernt. Im vorliegenden Beispielsfall wird bereits beim Einführen des Saugrohrs 50 in den Befüllschlauch 20 mit dem Absaugen begonnen. Dadurch können auch auf der umlaufenden Kante 30 vorhandene Flüssigkeitstropfen 32 entfernt werden. Nach dem vollständigen Einführen des Saugrohrs 50 in den Befüllschlauch 20 kann das Absaugen noch eine gewisse Zeit fortgesetzt werden, bis keine Flüssigkeitsrückstände an der Innenseite 24 des Befüllschlauchs 20 mehr verbleiben (siehe Fig. 4). Die Dauer des Absaugens kann dabei abhängig von der Flüssigkeit 22 und dem Material des Befüllschlauchs 20 variiert werden.

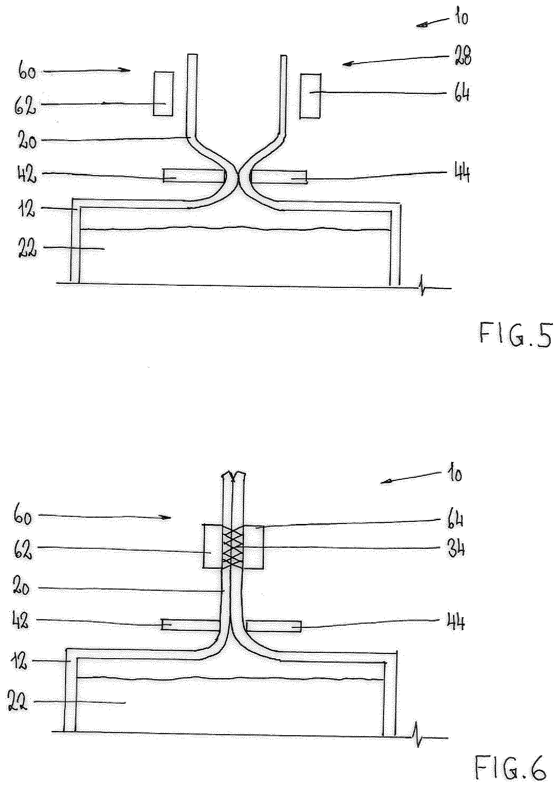

Das Saugrohr 50 kann anschließend wieder aus dem Befüllschlauch 20 entfernt werden (siehe Fig. 5). Dabei sollte die Klemmung des Befüllschlauchs 20 durch die Klemmvorrichtung 40 zunächst noch aufrecht erhalten bleiben, damit es zu keiner erneuten Verschmutzung des Befüllschlauchs 20 kommen kann.

Der Befüllschlauch 20 kann anschließend mittels einer Siegelnaht 34 verschlossen werden. Dies kann im vorliegenden Beispielsfall ebenfalls mit der erfindungsgemäßen Vorrichtung 10 erfolgen. Die Vorrichtung 10 besitzt dazu eine Siegelvorrichtung 60. Die Siegelvorrichtung 60 besitzt im vorliegenden Beispielsfall zwei Siegelbacken 62, 64. Die Siegelvorrichtung 60 ist zwischen der Klemmvorrichtung 40 und der umlaufenden Kante 30 des Befüllschlauchs 20 angeordnet. Die Siegelnaht 34 kann somit unmittelbar nach dem Entfernen des Saugrohrs 50 hergestellt werden (siehe Fig. 6). Die Innenseite 24 des Befüllschlauchs 20 ist dadurch weitgehend von Flüssigkeitsresten befreit, so dass eine Siegelnaht 34 mit hoher Qualität hergestellt werden kann.

Alternativ dazu kann die Siegelnaht 34 auch in einer nachgelagerten Bearbeitungsstation hergestellt werden. In diesem Fall kann es sinnvoll sein, die Klemmvorrichtung 40 so auszubilden, dass die Klemmung des Befüllschlauchs 20 auch während des Transports des Beutels 12 von der erfindungsgemäßen Vorrichtung 10 in diese nachgelagerte Bearbeitungsstation beibehalten werden kann. Dies kann eine erneute Verschmutzung der Innenseite des Befüllschlauchs 20 verhindern.

Die Siegelnaht 34 kann - wie in den Zeichnungen dargestellt - lediglich im mittleren Bereich des Befüllschlauchs 20 gesetzt werden. Alternativ dazu könnte die Siegelnaht 34 auch bis an den unten und/oder oberen Rand des Befüllschlauchs 20 reichen.

## Patentansprüche

1. Vorrichtung (10) zum Vorbereiten des Schweißnahtbereichs des Befüllschlauchs (20) eines Beutels (12),
- mit einer Halteeinrichtung für den Beutel (12),
- mit einem Saugrohr (50), das in den Befüllschlauch (20) des Beutels (12) einführbar ist,
- mit einer Klemmvorrichtung (40), durch die der Befüllschlauch (20) oder der Beutel (12) abklemmbar ist.

2. Vorrichtung nach Anspruch 1,
- **dadurch gekennzeichnet, dass**
- der Befüllschlauch (20) zwischen dem freien Ende des Saugrohrs (50) und dem Beutel (12) abklemmbar ist.

3. Vorrichtung nach Anspruch 1 oder 2,
- **dadurch gekennzeichnet, dass**
- zwischen der Außenwand des Saugrohrs (50) und der Innenwand (24) des Befüllschlauchs (50) ein umlaufender Zwischenraum (52) ausgebildet ist.

4. Vorrichtung nach einem der vorstehenden Ansprüche,
- **dadurch gekennzeichnet, dass**
- eine Siegelvorrichtung (60) vorhanden ist,
- die Siegelvorrichtung (60) zwischen der Klemmvorrichtung (40) und dem freien Ende (32) des Befüllschlauchs (20) angeordnet ist.

5. Vorrichtung nach Anspruch 4,
- **dadurch gekennzeichnet, dass**
- die Siegelvorrichtung (60) zumindest zwei Siegelbacken (62, 64) aufweist.

6. Verfahren zum Vorbereiten des Schweißnahtbereichs des Befüllschlauchs (20) eines Beutels (12), mit folgenden Verfahrensschritten:
a) der Befüllschlauch (20) oder der Beutel (12) wird abgeklemmt,
b) ein Saugrohr (50) wird in den Befüllschlauch (20) des Beutels (12) eingeführt,
c) die in dem Befüllschlauch (20) verbliebene Flüssigkeit (26, 32) wird über das Saugrohr (50) abgesaugt.

7. Verfahren nach Anspruch 6,
- **dadurch gekennzeichnet, dass**
- in Verfahrensschritt a) der Befüllschlauch (20) zwischen dem Beutel (12) und dem freien Ende eines Saugrohrs (50) abgeklemmt wird.

8. Verfahren nach Anspruch 6 oder 7,
- **dadurch gekennzeichnet, dass**
- die Verfahrensschritte a) und b) in beliebiger Reihenfolge durchgeführt werden können.

9. Verfahren nach Anspruch 6 oder 7,
- **dadurch gekennzeichnet, dass**
- zunächst Verfahrensschritt a) durchgeführt wird,
- das Absaugen der in dem Befüllschlauch (20) verbliebenen Flüssigkeit (26, 32) bereits während des Einführens des Saugrohrs (50) erfolgt.

10. Verfahren nach Anspruch 9,
- **dadurch gekennzeichnet, dass**
- das Absaugen der in dem Befüllschlauch (20) verbliebenen Flüssigkeit (26, 32) nach dem Einführen des Saugrohrs (50) für eine gewisse Zeit fortgesetzt wird.

11. Verfahren nach einem der Ansprüche 6 bis 10,
- **dadurch gekennzeichnet, dass**
- das Saugrohr (50) aus dem Befüllschlauch (20) entfernt wird,
- der Befüllschlauch (20) zwischen dem abgeklemmten Bereich und dem freien Ende (30) des Befüllschlauchs (20) verschweißt wird.

## Geänderte Patentansprüche

### Geänderte Patentansprüche gemäss Regel 137(2) EPÜ.

1. Vorrichtung (10) zum Vorbereiten des Schweißnahtbereichs des Befüllschlauchs (20) eines Beutels (12),
- mit einer Halteeinrichtung für den Beutel (12),
- mit einem Saugrohr (50), das in den Befüllschlauch (20) des Beutels (12) einführbar ist,
- mit einer Klemmvorrichtung (40), durch die der Befüllschlauch (20) oder der Beutel (12) abklemmbar ist, wobei die Klemmvorrichtung (40) zwischen dem freien Ende des Saugrohrs (50) und dem Beutel (12) oder im oberen Bereich des Beutels (12) angeordnet ist,
- **dadurch gekennzeichnet, dass**
- eine Siegelvorrichtung (60) vorhanden ist,
- die Siegelvorrichtung (60) zwischen der Klemmvorrichtung (40) und dem freien Ende (32) des Befüllschlauchs (20) angeordnet ist.

2. Vorrichtung nach Anspruch 1,
- **dadurch gekennzeichnet, dass**
- zwischen der Außenwand des Saugrohrs (50) und der Innenwand (24) des Befüllschlauchs (50) ein umlaufender Zwischenraum (52) ausgebildet ist.

3. Vorrichtung nach Anspruch 1 oder 2,
- **dadurch gekennzeichnet, dass**
- die Siegelvorrichtung (60) zumindest zwei Siegelbacken (62, 64) aufweist.

4. Verfahren zum Vorbereiten des Schweißnahtbereichs des Befüllschlauchs (20) eines Beutels (12), mit folgenden Verfahrensschritten:
a) der Befüllschlauch (20) oder der Beutel (12) wird abgeklemmt,
b) ein Saugrohr (50) wird in den Befüllschlauch (20) des Beutels (12) eingeführt,
c) die in dem Befüllschlauch (20) verbliebene Flüssigkeit (26, 32) wird über das Saugrohr (50) abgesaugt,
- **dadurch gekennzeichnet, dass**
- das Saugrohr (50) nach Beendigung des Verfahrensschritts c) aus dem Befüllschlauch (20) entfernt wird,
- der Befüllschlauch (20) zwischen dem abgeklemmten Bereich und dem freien Ende (30) des Befüllschlauchs (20) verschweißt wird.

5. Verfahren nach Anspruch 4,
- **dadurch gekennzeichnet, dass**
- in Verfahrensschritt a) der Befüllschlauch (20) zwischen dem Beutel (12) und dem freien Ende des Saugrohrs (50) abgeklemmt wird.

6. Verfahren nach Anspruch 4 oder 5,
- **dadurch gekennzeichnet, dass**
- die Verfahrensschritte a) und b) in beliebiger Reihenfolge durchgeführt werden können.

7. Verfahren nach Anspruch 4 oder 5,
- **dadurch gekennzeichnet, dass**
- zunächst Verfahrensschritt a) durchgeführt wird,
- das Absaugen der in dem Befüllschlauch (20) verbliebenen Flüssigkeit (26, 32) bereits während des Einführens des Saugrohrs (50) erfolgt.

8. Verfahren nach Anspruch 7,
- **dadurch gekennzeichnet, dass**
- das Absaugen der in dem Befüllschlauch (20) verbliebenen Flüssigkeit (26, 32) nach dem Einführen des Saugrohrs (50) für eine gewisse Zeit fortgesetzt wird.
